(19) **Europäisches Patentamt / European Patent Office / Office européen des brevets**

(11) **EP 2 349 800 B1**

(12) **EUROPEAN PATENT SPECIFICATION**

(45) Date of publication and mention
of the grant of the patent:
**11.04.2018 Bulletin 2018/15**

(21) Application number: **09822276.3**

(22) Date of filing: **20.10.2009**

(51) Int Cl.:
**B60W 10/02** *(2006.01)* **B60W 10/04** *(2006.01)*
**B60W 30/188** *(2012.01)* **B60W 10/06** *(2006.01)*
**B60W 30/18** *(2012.01)*

(86) International application number:
**PCT/SE2009/051189**

(87) International publication number:
**WO 2010/047652 (29.04.2010 Gazette 2010/17)**

(54) **METHOD, ARRANGEMENT AND COMPUTER PROGRAM PRODUCT FOR CONTROL OF ENGINE SPEED DURING A STARTING PHASE OF A VEHICLE**

VERFAHREN, ANORDNUNG UND COMPUTERPROGRAMMPRODUKT ZUR STEUERUNG DER MOTORDREHZAHL WÄHREND DER STARTPHASE EINES FAHRZEUGS

PROCÉDÉ, AGENCEMENT ET PRODUIT-PROGRAMME D' ORDINATEUR DESTINÉS À COMMANDER LA VITESSE DE MOTEUR PENDANT UNE PHASE DE DÉMARRAGE D'UN VÉHICULE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.10.2008 SE 0850044**

(43) Date of publication of application:
**03.08.2011 Bulletin 2011/31**

(73) Proprietor: **Scania CV AB (publ)**
**151 87 Södertälje (SE)**

(72) Inventors:
• **HANSSON, Mikael**
**S-125 51 Älvsjö (SE)**
• **KJELL, Anders**
**S-167 38 Bromma (SE)**

(74) Representative: **Scania CV AB**
**Patents, GP 117kv**
**151 87 Södertälje (SE)**

(56) References cited:
EP-A2- 0 328 299    EP-A2- 1 174 303
EP-A2- 1 174 303    WO-A2-98/46909
DE-A1- 10 311 445    US-A1- 2004 192 504

**Description**

TECHNICAL FIELD

The present invention relates to a method according to the preamble of claim 1 for control of engine speed when setting a vehicle in motion. The invention relates also to a device according to the preamble of claim 11 for control of engine speed when setting a vehicle in motion. The invention relates also to a motor vehicle. The invention relates also to a computer programme and computer programme product.

BACKGROUND

A method for speed control of an engine according to the preamble of claim 1 is known from WO98/46909A2. Motor vehicles may be equipped with automatic transmissions comprising automatic clutch systems. A variant of clutch systems is so-called slipping clutches of, for example, the single-plate or double-plate clutch type. In the case of a vehicle with such an automated clutch, the driver operates the accelerator pedal to mobilise power and hence torque for propelling the vehicle, and the position of the clutch determines the amount of torque transmitted.

When setting a relatively heavy vehicle in motion on, for example, a steep upgrade, it may happen that the torque in the engine at a lowest possible/specified engine speed is not sufficient to cause the vehicle to move, in which case the engine speed has to be raised. Hence the need for control of engine speed when the vehicle is being set in motion. The energy in the clutch is related to engine speed in that the higher the engine speed, the more the energy supplied to the clutch and the more the clutch wear. Consequently, if the engine speed is adapted to being raised more than is required, the clutch will suffer unnecessary wear, and if the engine speed is adapted to being raised too little or not at all, the vehicle risks not moving at all.

OBJECT OF THE INVENTION

An object of the present invention is provide a method for controlling the engine speed of a motor vehicle with automated transmission when it is being set in motion, in such a way that unnecessary wear of its clutch is prevented while at the same time the vehicle can easily and smoothly move off even when a large amount of torque is required, as when setting off on an upgrade.

Another object of the present invention is provide a device for controlling the engine speed of a motor vehicle with automated transmission when it is being set in motion, in such a way that unnecessary wear of its clutch is prevented while at the same time the vehicle can easily and smoothly move off even when a large amount of torque is required, as when setting off on an upgrade.

A further object of the present invention is provide a method and computer programme for controlling the engine speed of a motor vehicle with automated transmission when it is being set in motion, in such a way that unnecessary wear of its clutch is prevented while at the same time the vehicle can easily and smoothly move off even when a large amount of torque is required, as when setting off on an upgrade.

SUMMARY OF THE INVENTION

These and other objects indicated by the description set out below are achieved by a method for control of engine speed when setting a vehicle in motion, a device for control of engine speed when setting a vehicle in motion, a motor vehicle, a computer programme and computer programme product as above, which further exhibit respectively the features indicated in the characterising parts of the attached independent claims 1, 11, 20, 21, 22 and 23. Preferred embodiments of the method and the device are defined in the attached dependent claims 2-10 and 12-19.

According to the invention, the objects are achieved with a method for control of engine speed for a motor vehicle with automatic transmission at the time of engaging a clutch of the vehicle when said vehicle is being set in motion, comprising the steps of:

- requesting a desired clutch torque;
- determining current clutch torque and a closing rate for the clutch at the time of engaging it;
- determining the dynamic torque increase required for providing the engine speed increase required when engaging the clutch at said closure rate;
- determining, on the basis of parameters comprising said current clutch torque and said dynamic torque increase, a necessary engine torque for achieving said requested clutch torque;
- determining from said necessary engine torque a necessary engine speed for achieving said requested clutch torque; and
- raising the engine speed to the necessary engine speed if the latter is greater than a predetermined engine speed.

Unnecessary wear of the vehicle's clutch is thus prevented while at the same time the vehicle can move off easily and smoothly when a large amount of torque is required, as when setting the vehicle in motion on an upgrade, so that clutch wear occurs only when it is required.

According to an embodiment, the method comprises the step of repeating said steps for as long as the clutch slips, thus making it possible for the method to be effected satisfactorily throughout the process of setting the vehicle in motion.

According to an embodiment of the method, the parameters in the step of determining the necessary engine torque further comprise a torque margin which is greater than potential error in determining the engine torque. Possible errors in the engine's torque reporting are thus taken into account.

According to an embodiment of the method, the clutch torque increase, i.e. the closure rate of the clutch, is so calibrated that there is a maximum rate at which the clutch can be closed. This is advantageous in the case of electrohydraulic clutch systems in which the clutch can be controlled easily and quickly by an electronic control unit.

According to an embodiment of the method, the step of determining the dynamic engine torque increase comprises the steps of: determining the derivative of the engine torque on the basis of the derivative of the clutch torque; determining the derivative of the engine speed from the derivative of the engine torque, said dynamic engine torque increase being determined on the basis of the engine's moment of inertia and said derivative of the engine speed.

According to an embodiment of the method, the step of determining a necessary engine speed is effected by means of a torque/speed relationship predetermined for the engine. The process of setting the vehicle in motion thus involves using a torque/speed relationship which is known for the specific engine, the engine torque being therefore strongly dependent on the engine speed, and the engine torque which is applied being according to a variant the maximum engine torque in relation to the engine speed and according to an alternative variant a prescribed desired engine torque in relation to the engine speed.

According to an embodiment of the method, the step of determining the derivative of the engine speed is effected on the basis of a torque/speed relationship predetermined for the engine. During the process of setting the vehicle in motion, the use of a torque/speed relationship which is known for the specific engine, the engine torque being therefore strongly dependent on the engine speed, and the engine torque which is applied being according to a variant the maximum engine torque in relation to the engine speed and according to an alternative variant a prescribed desired engine torque in relation to the engine speed, makes it easy to arrive at the derivative of the engine speed by derivation of the engine speed in relation to the engine torque.

According to an embodiment of the method, the step of determining current clutch torque comprises the step of: detecting said clutch torque by means of a clutch torque sensor, resulting in a relatively exact clutch torque value.

According to an embodiment of the method, the step of determining current clutch torque comprises the step of: modelling the clutch torque by means of clutch input data. An advantage of modelling the clutch torque is that no sensor is required, since the clutch torque for different clutch positions is known beforehand. This is used with advantage at low torque.

According to an embodiment of the method, the step of determining current clutch torque comprises the step of: estimating the clutch torque from the engine torque and the engine's moment of inertia and the engine's speed increase. An advantage is that no sensor is required. This is better suited to higher torque at which errors in reporting/determining the engine torque $T_E$ do not have as much effect as at lower torque. This embodiment and the embodiment in which the clutch torque is modelled may thus with advantage be combined, the clutch torque being modelled at relatively low engine torque and being determined by the engine torque at relatively higher engine torque.

These objects are achieved also with a device for control of engine speed for a motor vehicle with automatic transmission at the time of engaging a clutch of the vehicle when setting said vehicle in motion, which device comprises the features according to claim 11. Advantageous embodiments of the device according to the invention are indicated in the dependent claims 12-19.

These objects are achieved also with a motor vehicle which comprises the features according to claim 20 and may be a truck, a bus or a passenger car.

These objects are achieved also with a computer programme for control of engine speed for a motor vehicle with automatic transmission at the time of engaging a clutch of the vehicle when setting said vehicle in motion, which computer programme comprises programme code stored on a computer-readable medium for performing the method steps according to claims 1-10 and is run on an electronic control unit or another computer connected to the electronic control unit.

These objects are achieved also with a computer programme product which comprises a programme code stored on a computer-readable medium for performing the method steps according to claims 1-10 and is run on an electronic control unit or another computer connected to the electronic control unit.

These objects are achieved also with a computer programme product directly storable in an internal memory in an electronic control unit or another computer connected to the electronic control unit, comprising a computer programme for performing the method steps according to claims 1-10, which computer programme is run on the computer.

DESCRIPTION OF THE DRAWINGS

The present invention will be understood better with reference to the following detailed description read together with the attached drawings, in which the same reference notations pertain to similar parts throughout the many views, and in which:

Fig. 1 schematically illustrates a motor vehicle according to an embodiment of the invention;

Fig. 2a schematically illustrates a subsystem of the vehicle depicted in Fig. 1, according to an embodiment of the invention;

Fig. 2b schematically illustrates the vehicle's driveline with alternative torque sensor locations according to embodiments of the invention;

Fig. 3 schematically illustrates predetermined engine torque as a function of engine speed for the motor vehicle depicted in Fig. 1, according to an embodiment of the invention;

Fig. 4a schematically illustrates requested clutch torque as a function of accelerator pedal position for the motor vehicle depicted in Fig. 1, according to an embodiment of the invention;

Fig. 4b schematically illustrates requested clutch torque as a function of clutch position for the motor vehicle depicted in Fig. 1, according to an embodiment of the invention;

Fig. 5 schematically illustrates a flowchart according to an embodiment of the invention;

Fig. 6 schematically illustrates an algorithm according to an embodiment of the invention; and

Fig. 7 schematically illustrates a computer according to an embodiment of the invention.

DESCRIPTION OF EMBODIMENTS

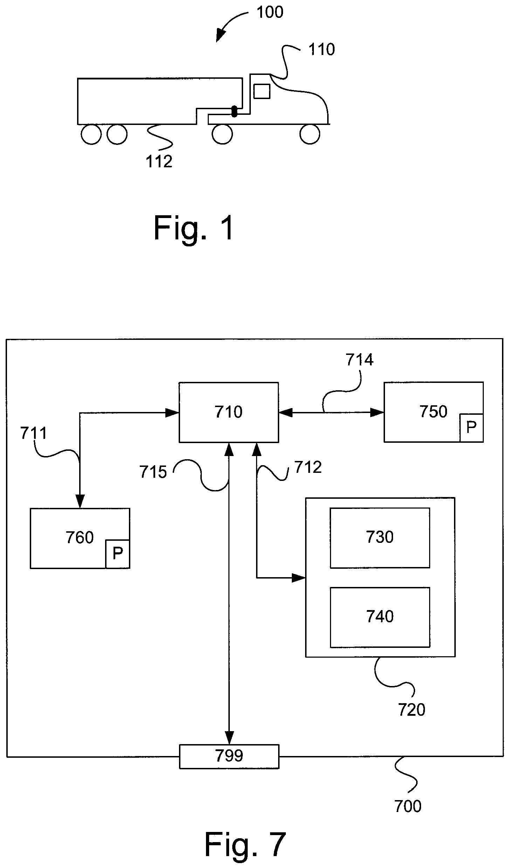

Figure 1 depicts a side view of a vehicle 100. The exemplified vehicle 100 comprises a tractor unit 110 and a trailer 112. The vehicle may be a heavy vehicle, e.g. a truck or a bus. The vehicle may alternatively be a passenger car. The vehicle 100 is a motor vehicle with automated transmission.

The term "link" refers herein to a communication link which may be a physical line such as an opto-electronic communication line, or a non-physical line such as a wireless connection, e.g. a radio link or microwave link.

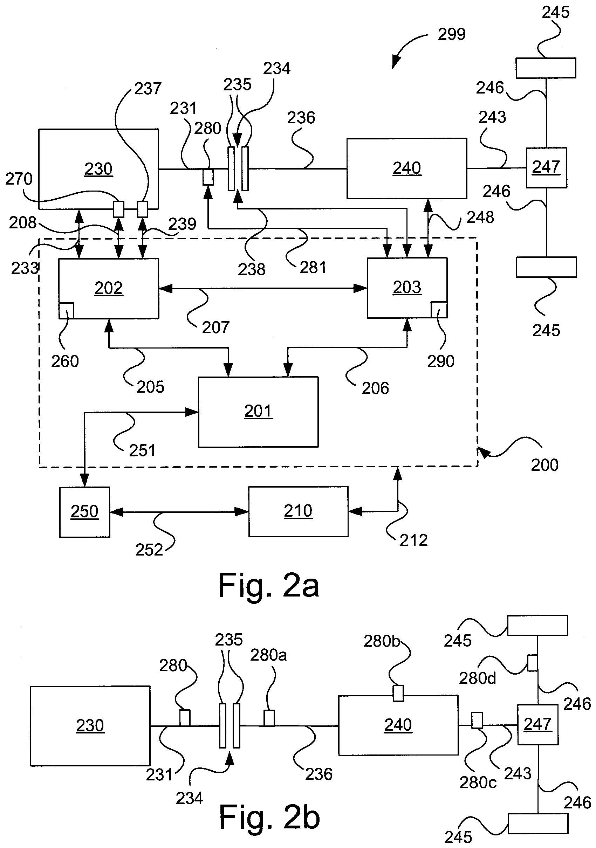

Figure 2a depicts a subsystem 299 of the vehicle 100. The subsystem 299 is situated in the tractor unit 110. The subsystem 299 comprises a driveline comprising an engine 230, a clutch 235 connected to an output shaft 231 of the engine and forming part of a clutch system 234, a gearbox 240 with an input shaft 236 connected to the clutch 235, and an output shaft 243 connected to powered wheels 245 of the vehicle via a gear 247, e.g. a bevel gear 247, which powered wheels 245 are connected to the bevel gear 247 by a driveshaft 246.

The engine 230 according to an embodiment is a combustion engine. The combustion engine according to an embodiment is an engine with six cylinders. The combustion engine according to an embodiment is a diesel engine. According to another embodiment the engine is a gasoline engine and according to a further embodiment the engine is an ethanol engine. According to another variant the engine is a so-called flexifuel engine, i. e. it can run on both ethanol and gasoline in a desired mixture. The engine 230 has a starter motor (not depicted) adapted to starting the engine upon request from a driver of the vehicle 100.

The subsystem 299 further comprises an operating means 250 for power mobilisation, e.g. an acceleration control, such as an accelerator pedal 250. Power mobilisation may be generated on the basis of an action effected by the driver which corresponds to a wish of the driver to provide power to the vehicle for it to travel. The operating means 250 may also be viewed as a representation of the possibility that power mobilisation might be implemented on the basis, for example, of a signal via a link from some other subsystem in the vehicle 100.

The invention is particularly applicable in situations where the vehicle is stationary on the running surface and the driver is about to set the vehicle in motion and drive off by using the operating means 250 for power mobilisation.

The output shaft 231 of the engine 230 is connected to the clutch 235. The clutch 235 according to a variant is of a conventional disc type, e.g. a single-plate or double-plate clutch. The clutch system 234 according to a preferred variant is electrohydraulic, which has the advantage of being easy to control quickly and exactly by means of an electronic control unit. The clutch system may alternatively be pneumatic. The clutch 235 of the clutch system is also connected to the input shaft 236 of the gearbox 240. The output shaft 243 of the gearbox 240 is adapted to transmitting power via the bevel gear to a number of vehicle wheels 245 in a conventional manner. The clutch 235 is adapted to being able to interrupt the power transmission in the driveline.

The specific moment of inertia $J_E$ of the engine 230 is known from mechanical calculations in which according to a variant it is calculated by means of 3D models. The moment of inertia $J_E$ for the respective engine is therefore a known parameter.

The subsystem 299 comprises a first control unit 201. The first control unit 201 is connected for signalling purposes to the operating means 250 for power mobilisation, via a link 251. A driver of the vehicle can request torque from the engine by using the operating means 250. According to an embodiment, the moment of inertia parameter is programmed in as a constant in the first control unit 201, a second control unit 202 and a third control unit 203.

The subsystem 299 comprises a second control unit 202 which according to a version is adapted to controlling the engine 230 via a link 233. To this end, the second control unit 202 is connected for signalling purposes to operating means (not depicted), e.g. injection valves for injecting fuel to the engine's cylinders. The second control unit 202 is adapted to controlling engine speed $\omega_E$ and engine torque $T_E$. The engine speed is intended to be controlled by an engine speed regulator 260 situated in the second control unit. The fact that the engine speed regulator 260 is situated in the second control unit provides rapid control of the engine speed, since there is no need for any communication link such as a CAN. Apart from the set-point value, all the signals used by the engine speed regulator 260 are internal in the second control unit, thereby making it possible to optimise the rapidity of the engine speed regulator 260. The engine speed regulator may alternatively be situated outside the second control unit in any desired suitable manner for control of the engine speed.

The instantaneous torque $T_E$ of the engine 230 may be established by the second control unit 202 in a conventional manner. The engine torque $T_E$ is indicated in Nm. This establishing of the torque $T_E$ generated by the engine is done in the control unit 202 continuously. This establishing of the torque $T_E$ generated by the engine 230 may be done on the basis of the amount of fuel supplied to the combustion chambers of the engine 230. Alternatively, the torque of the engine 230 may be detected by a suitable sensor 237 which is adapted to sending to the control unit 202 via a link 239 a signal containing information about the instantaneous value of the engine torque $T_E$.

The subsystem 299 further comprises a third control unit 203 which according to a version is adapted to controlling the clutch 235 via a link 238 and to controlling the gearbox 240 via a link 248. According to a variant, the third control unit 203 is adapted to controlling the position of the clutch 235 by means of a clutch regulator 290 situated in the third control unit 203. The clutch regulator may alternatively be situated outside the third control unit in any desired suitable manner for control of clutch position.

According to a variant, the maximum closure rate for the clutch 235 is calibrated to a desired closure rate. The third control unit 203 is therefore adapted to controlling the closure rate on the basis of said calibration. Calibration of the clutch closure rate refers to the derivative of the clutch torque $\dot{T}_C$. The change in the clutch torque $T_C$ at the time of setting the vehicle in motion is thus known. The maximum closure rate for the clutch is therefore so calibrated that the calibrated closure is effected if the driver uses the accelerator pedal to request a quicker closure. If the driver uses the accelerator pedal to request a slower closure of the clutch than the maximum closure rate, the clutch will close slowly in accordance with that request.

The first control unit 201 is provided with communication with the second control unit 202 via a link 205 and communication with the third control unit 203 via a link 206.

The first control unit 201 is adapted to communicating positions of the operating means 250 for power transmission, e.g. accelerator pedal positions.

The second control unit 202 is provided with communication with the third control unit 203 via a link 207. An engine speed sensor 270 is provided close to the engine 230 to detect the engine's speed, and the second control unit 202 is adapted to receiving from the engine speed sensor 270 via a link 208 a signal representing engine speed data. The second control unit 202 is adapted to processing said engine speed data, inter alia in order to determine engine acceleration $\dot{\omega}_E$ i.e. the derivative of the engine speed $\omega_E$. The second control unit 202 is adapted to sending to the third control unit 203 a signal representing engine torque $T_E$ and a signal representing engine speed $\omega_E$.

On the basis of positions of the operating means/accelerator pedal 250, i.e. on the basis of power requested by the driver via the operating means 250, the second control unit 202 is adapted to determining the requested clutch torque $T_{Cr}$. The power which is controlled via the operating means 250 is the power which, possibly via gearing, drives the vehicle's wheels 245. The power is substantially a gear ratio multiplied by the clutch torque $T_C$. Thus the power can be controlled by controlling the clutch torque $T_C$. Alternatively, the third control unit 203 might be adapted to determining current clutch torque $T_C$ on the basis of accelerator pedal position (requested clutch torque $T_{Cr}$). The requested clutch torque $T_{Cr}$ approximates well in many cases to the clutch torque $T_C$.

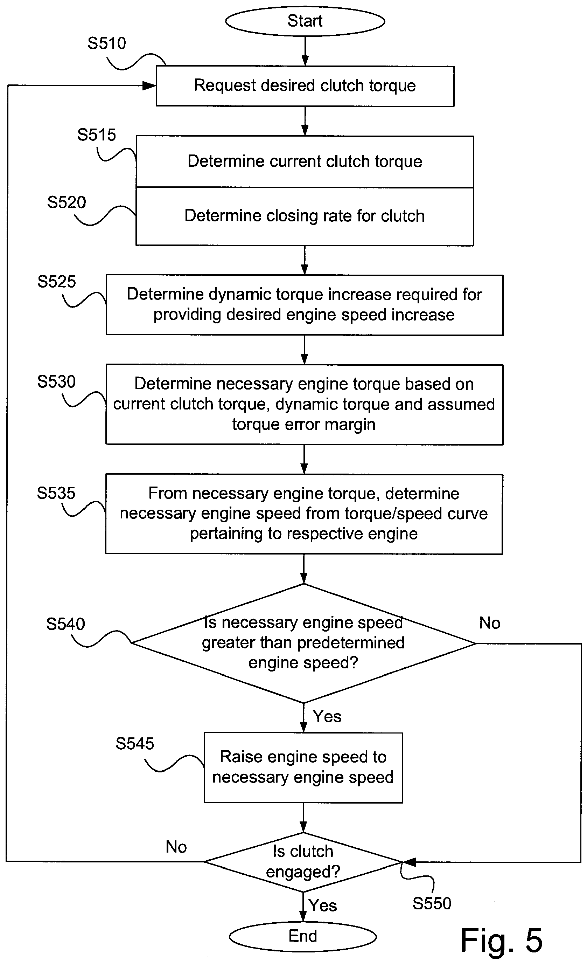

Alternatively or complementarily, the clutch torque $T_C$ is estimated from the engine torque $T_E$, as will be explained in more detail in relation to the method described with reference to Fig. 5.

Alternatively or complementarily, the clutch torque $T_C$ may be arrived at via a clutch torque sensor 280 adapted to detecting the clutch torque $T_C$. The subsystem 299 therefore comprises according to a variant a clutch torque sensor 280 adapted to detecting clutch torque $T_C$. The third control unit 203 is adapted to receiving from the clutch torque sensor 280 via a link 281 a signal representing clutch torque data. Alternatively, the first control unit 201 or the second control unit 202 might be adapted to receiving from the clutch torque sensor 280 signals representing clutch torque data. Fig. 2b depicts various sensor locations for detection of clutch torque $T_C$.

According to a variant, the first, second and third control units are comprised by a control unit 200 depicted in broken line form in Fig. 2a. Alternatively, the first, second and third control units each take the form of a control unit with corresponding functions and adapted to effecting corresponding controls. Other control unit variants for allocation of said functions are also possible.

A fourth control unit 210 is provided with communication with the first, second and third control units via links, here represented by a link 212 to the control unit 200. The fourth control unit 210 may be detachably connected to the control unit 200. The fourth control unit 210 may be a control unit external to the vehicle 100. The fourth control unit 210 may be adapted to performing the innovative method steps according to the invention.

The fourth control unit 210 may be used for transferring software to the control unit 200, particularly software for controlling the engine speed of a motor vehicle with automatic transmission at the time of clutch engagement when setting said vehicle in motion. The fourth control unit 210 may alternatively be provided with communication with the control unit 200 via an internal network in the vehicle.

The fourth control unit 210 is provided with communication with the operating means 250 via a link 252.

Fig. 2b depicts the driveline of the vehicle according to Fig. 1 with alternative clutch torque sensor locations.

The driveline comprises an engine 230, a clutch 235 connected to an output shaft 231 of the engine and forming part of a clutch system 234, a gearbox 240 with an input shaft 236 connected to the clutch 235, and an output shaft 243 connected to powered wheels 245 of the vehicle via a bevel gear 247, which powered wheels 245 are connected to the bevel gear 247 by a driveshaft 246.

According to a variant, the clutch torque sensor 280 is situated close to the output shaft 231 of the engine 230, as also depicted in Fig. 2a.

According to a variant, the clutch torque sensor 280a is situated close to the input shaft 236 of the gearbox 240.

According to a variant, the clutch torque sensor 280b is situated close to the gearbox and any gearing has to be taken into account.

According to a variant, the clutch torque sensor 280c is situated close to the output shaft 243 of gearbox 240 and any gearing has to be taken into account.

According to a variant, the clutch torque sensor 280d is situated close to the driveshaft 246 of the powered wheels 245 and any gearing has to be taken into account.

Irrespective of its location, the clutch torque sensor 280; 280a; 280b; 280c; 280d is adapted to detecting torque and to sending signals representing clutch torque data to a control unit 200; 201; 202; 203 which according to an embodiment takes the form of the third control unit 203. According to an alternative embodiment, the clutch torque sensor 280; 280a; 280b; 280c; 280d is adapted to continuously sending to a control unit 200; 201; 202; 203 signals which contain information about the relative instantaneous clutch torque $T_C$ of the clutch 235. The control unit 200; 201; 202; 203 can on the basis of these signals calculate clutch torque $T_C$ and clutch torque increase $\dot{T}_C$.

One or more sensors may be provided according to the above location examples, and a variant makes it possible for two or more clutch torque sensors 280 to be adapted to sending to control units signals which contain information about relative instantaneous clutch torque, i.e. current clutch torque, thereby affording the possibility of statistically more exact values of said clutch torque.

Herein, according to an example of the invention, the innovative method is initiated and controlled by the first control unit 201, the second control unit 202 and the third control unit 203. Alternatively, the innovative method is initiated and controlled by the external electronic control unit 210.

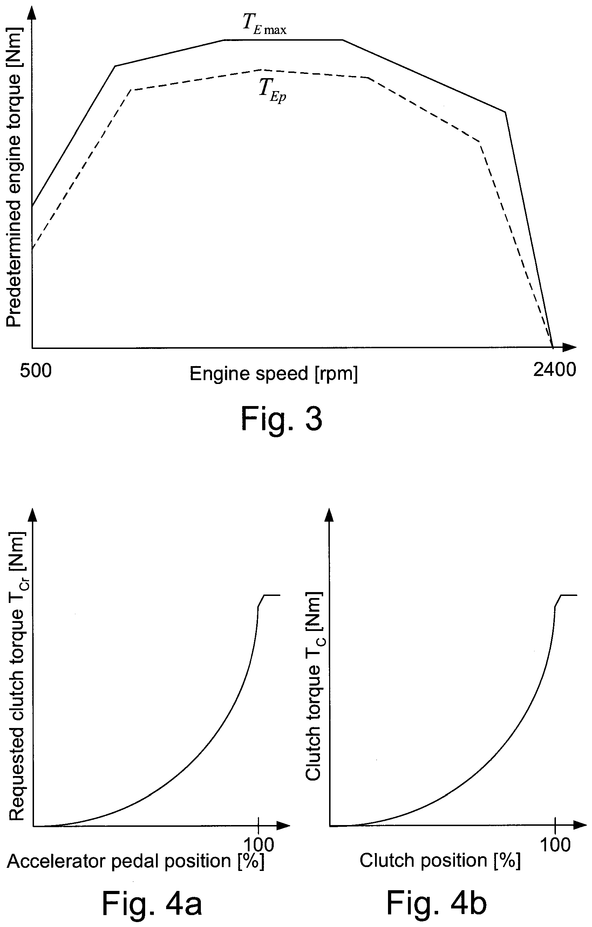

Fig. 3 depicts maximum engine torque $T_{Emax}$ and a lower calibrated engine torque $T_{Ecal}$, which differs from maximum torque, as a function of engine speed $\omega_E$ for the engine 230 during setting in motion of the motor vehicle 100 depicted in Fig. 1, according to an embodiment of the invention. Such a curve is referred to in Fig. 2a and Fig. 5.

The continuous line represents maximum engine torque $T_{Emax}$ as a function of engine speed $\omega_E$ for an engine, i.e. the maximum torque which the engine can deliver at the specific engine speed, here called the maximum torque curve.

The broken line represents a lower engine torque $T_{Ep}$, prescribed for the same engine, as a function of the engine speed $\omega_E$. The alternative broken curve is arrived at by recalibrating the maximum torque curve. The result is a different engine speed increase when setting the vehicle in motion than in the case represented by the continuous curve, which represents the maximum torque of the engine 230 as a function of the engine speed when the vehicle is being set in motion. As a prescribed lower engine torque in relation to engine speed simulates the engine 230 being less powerful, the result is an earlier engine speed increase. An advantage of this is that it makes it possible to alter the sensation experienced when operating the operating means/accelerator pedal 250, so that a stronger sensation is provided, i.e. the engine speed increases more quickly when acceleration is applied.

As illustrated in Fig. 3, the engine's torque curves $T_{Emax}$, $T_{Ep}$ are strongly dependent on engine speed within the engine speed range which is used when setting the vehicle in motion. For the engine 230 to be controllable by engine speed when the vehicle is being set in motion and the clutch 235 is loading the engine with a high clutch torque $T_C$, there needs to be surplus torque which the engine speed regulator 260 can utilise. The rapidity of the engine speed regulator is proportional to this torque margin. To be able to raise the engine speed quickly at the time of engaging the clutch 235 when the vehicle is being set in motion and the clutch 235 is loading the engine 230, a large amount of torque is required for the engine speed regulator to effect this engine speed rise. In rapid clutch engagement the engine speed has to be raised more than in slow clutch engagement at the same torque. A further requirement is that in rapid engagement of the clutch 235 the engine speed needs to be raised earlier than in slow clutch engagement at the same torque. The torque required for the engine speed regulator to effect this engine speed rise is therefore dynamic and is hereinafter called the dynamic torque increase $T_D$. When the torque corresponding to the dynamic torque increase $T_D$ is reached, a raising of the engine speed is required.

The engine has accordingly a predetermined torque/speed relationship.

Fig. 4a depicts requested clutch torque $T_{Cr}$ as a function of the position of an operating means/accelerator pedal 250 of the motor vehicle depicted in Fig. 1, according to an embodiment of the invention.

The requested clutch torque $T_{Cr}$ according to the curve in Fig. 4a is determined on the basis of the position of the operating means/accelerator pedal 250, i.e. on the basis of power requested by the driver via the operating means/accelerator pedal 250. The fact that the curve increases exponentially with the position of the operating means/accelerator pedal 250 so that when the operating means/accelerator pedal 250 approaches full activation, i.e. a fully depressed (100%) position, means that the requested clutch torque $T_{Cr}$ increases more quickly, resulting in a certain sensation when using the operating means/accelerator pedal 250 to accelerate. The calibration curve may be of any suitable shape for desired sensation of an operating means/accelerator pedal and may according to a variant be linear.

Fig. 4b depicts clutch torque $T_C$ as a function of the position of a clutch 235 of the motor vehicle depicted in Fig. 1, according to an embodiment of the invention.

According to a variant, the clutch torque is modelled by means of clutch input data, through knowing the configuration and characteristics of the clutch, the clutch torque $T_C$ being modelled on the basis of the clutch position, by regulating the clutch to a certain position, the clutch position being intended to be detected according to the charted estimated curve, e.g. according to Fig. 4b, which represents the relationship between clutch position and torque transmitted to the clutch.

Fig. 5 depicts a flowchart of a method according to an embodiment of the invention.

The method comprises a first method step S510 at which a desired clutch torque $T_{Cr}$ is requested by the driver activating the operating means 250, normally an accelerator pedal, by, according to a variant, depressing the accelerator pedal to a certain position.

The method comprises a second method step S515 which is performed on the basis of the first method step S510. At step S515, current clutch torque $T_C$ is determined for the clutch 235, which can be done in various ways.

According to an embodiment, step S515 is performed to determine current clutch torque $T_C$ by detecting said clutch torque by means of a clutch torque sensor 280; 280a; 280b; 280c; 280d situated close to the clutch 235 for said detection. The location of the sensor for detecting the clutch torque has already been discussed with reference to Fig. 2b. An advantage of determining the current clutch torque $T_C$ by sensor is that a relatively exact determination can be effected.

According to an embodiment, step S515 is performed to determine current clutch torque $T_C$ by modelling the clutch torque by means of clutch input data. Knowledge of the configuration and characteristics of the clutch is used to create a model of the clutch 235 whereby the clutch torque $T_C$ can be modelled on the basis of clutch position. According to a variant, the clutch torque $T_C$ is determined by regulating the clutch to a certain position according to a charted estimated curve which represents the relationship between clutch position and torque transmitted to the clutch. An example of such a curve is depicted in Fig. 4b. An advantage of modelling the clutch torque is that no sensor is required, since the clutch torque for different clutch positions is known beforehand. This is applied with advantage at low torque. The position of the clutch is controlled by a regulator 290 which guides the clutch to the position which provides the requested clutch torque.

According to an embodiment, step S515 is performed to determine current clutch torque $T_C$ by estimating it from the engine torque $T_E$, the moment of inertia $J_M$ of the engine 230 and the engine's speed increase/acceleration $\dot{\omega}_E$, i.e. the derivative of the engine speed, by subtracting the product of the engine's moment of inertia $J_M$ and speed increase $\dot{\omega}_E$ from the engine torque $T_E$. An advantage is that no sensor is required. This is better suited to higher torque at which errors in reporting/determining the engine torque $T_E$ do not have as much effect as at lower torque. This embodiment and the embodiment in which the clutch torque $T_C$ is modelled may thus with advantage be combined, the clutch torque $T_C$ being modelled at relatively low engine torque and being determined by the engine torque at relatively higher engine torque.

The method comprises a third method step S520 which is performed on the basis of the first method step, to determine the clutch torque increase $\dot{T}_C$, i.e. the rate at which the clutch 235 is brought into engagement, the closing rate of the clutch 235, which is the derivative of the clutch torque. The closure rate is so adapted so that the clutch 235 is brought into engagement at an appropriate rate such that any engine speed rise required is achieved before the requested clutch torque $T_{Cr}$ is reached. The clutch torque increase $\dot{T}_C$ may be determined in various ways, e.g. in many cases it can with advantage be approximated with the requested clutch torque increase $\dot{T}_{Cr}$, which often results in a more stable value with less noise. The clutch torque increase $\dot{T}_C$ will normally be close enough to the desired clutch torque increase $\dot{T}_{Cr}$ to serve as a usable approximation.

According to a preferred embodiment, the requested clutch torque increase $\dot{T}_{Cr}$, i.e. the requested closure rate of the clutch 235, is so calibrated that there is a maximum rate at which the clutch 235 can be requested to close. This is advantageous in using electrohydraulic clutch systems in which the clutch 235 can be controlled easily and quickly by an electronic control unit.

According to another embodiment, the clutch torque increase $\dot{T}_C$, i.e. the closing rate of the clutch 235, is so calibrated that there is a maximum rate at which the clutch 235 can be closed.

According to an alternative embodiment, the clutch 235 may itself be so configured and constructed that its closure brings it into engagement at a certain desired maximum rate. This is for example applicable to pneumatic clutches, depending on their mechanical construction, spring characteristic etc.

The method comprises a fourth method step S525 which is performed after the third method step, to determine the dynamic torque increase $T_D$ required for effecting the desired engine speed increase $\dot{\omega}_E$ in order to provide the requested clutch torque increase.

The dynamic clutch torque $T_D$ is arrived at by multiplying the moment of inertia $J_M$ of the engine 230 by the engine acceleration $\dot{\omega}_E$, i.e. the engine speed increase, which is the derivative of the engine speed. The moment of inertia of the engine 230 is known for each engine 230.

The derivative of the engine speed is arrived at according to an embodiment by treating as a function of engine speed $\omega_E$ the engine torque increase $\dot{T}_E$, i.e. the derivative of the engine speed, in a curve which represents an engine torque $T_E$ predetermined for the engine, the engine torque/engine speed curve being according to a variant the maximum engine torque $T_{Emax}$ for the engine at different engine speeds $\omega_E$, and according to another variant a precalibrated curve whereby the engine torque $T_E$ is lower than the maximum engine torque $T_{Emax}$, resulting in an earlier engine speed increase because it is then assumed that the engine 230 is less powerful than it really is. An example of such a curve is depicted in Fig. 3. The engine torque increase $\dot{T}_E$, i.e. the derivative of the engine speed, is arrived at according to a variant by the fact that it is the same as the clutch torque increase $\dot{T}_C$.

The method comprises a fifth method step S530 which is performed after the fourth method step, to determine the necessary engine torque $T_{En}$ for achieving desired clutch torque $T_{Cr}$.

The necessary engine torque $T_{En}$ is arrived at by adding together the dynamic torque surplus $T_D$, the current clutch torque $T_C$ and a torque error margin $T_{mar}$, which torque error margin caters for error tolerances of the engine 230 due, for example, to arcing and has to cover errors in the torque reporting of the engine 230. The torque error margin $T_{mar}$ depends also on how the clutch torque increase $\dot{T}_C$ is calculated, e.g. whether the clutch torque increase $\dot{T}_C$ is approximated with the requested clutch torque increase $\dot{T}_{Cr}$ and what error margins this entails. According to a variant, the torque error margin $T_{mar}$ is constant, e.g. 100 Nm. According to another variant the torque error margin $T_{mar}$ is variable, e. g. depending on engine speed.

The method comprises a sixth method step S535 which is performed after the fifth method step, to determine the required engine speed $\omega_{En}$ for achieving the requested clutch torque $T_{Cr}$.

The necessary engine speed is determined by a torque/speed relationship predetermined for the engine. The necessary engine speed $\omega_{En}$ is arrived at from the necessary engine torque $T_{En}$ by using the torque/speed curve pertaining to the engine 230, e.g. according to Fig. 3, from which curve the necessary engine speed can be read off.

The method comprises a seventh method step S540 which is performed after the sixth method step, to compare the necessary engine speed $\omega_{En}$ for achieving requested clutch torque $T_{Cr}$ with a certain predetermined engine speed $\omega_{Ed}$. This engine speed is according to a variant the idling speed. According to another variant, it is the lowest calibrated engine speed at clutch engagement which it is attempted to maintain if no engine speed increase is required.

If the necessary engine speed $\omega_{En}$ is lower than the predetermined engine speed $\omega_{Ed}$, no engine speed increase is required and the power surplus will be sufficient for the vehicle to move off.

If the necessary engine speed $\omega_{En}$ is higher than the predetermined engine speed $\omega_{Ed}$, an eighth method step S545 will raise the engine speed to the necessary engine speed $\omega_{En}$.

The method comprises a ninth method step S550, to investigate whether the clutch 235 is or is not being engaged, i.e. if the clutch is still slipping, a state known as slip, or is fully engaged, a state known as lock-up.

If the clutch 235 is engaged, the process of setting the vehicle in motion has been completed. If the clutch 235 is still slipping, it will therefore still be in the process of being brought into engagement, so the method starts again by requesting the desired clutch torque $T_{Cr}$. Should the desired clutch torque $T_{Cr}$ decrease, the necessary engine speed $\omega_{En}$ will decrease, resulting in a decrease in engine speed.

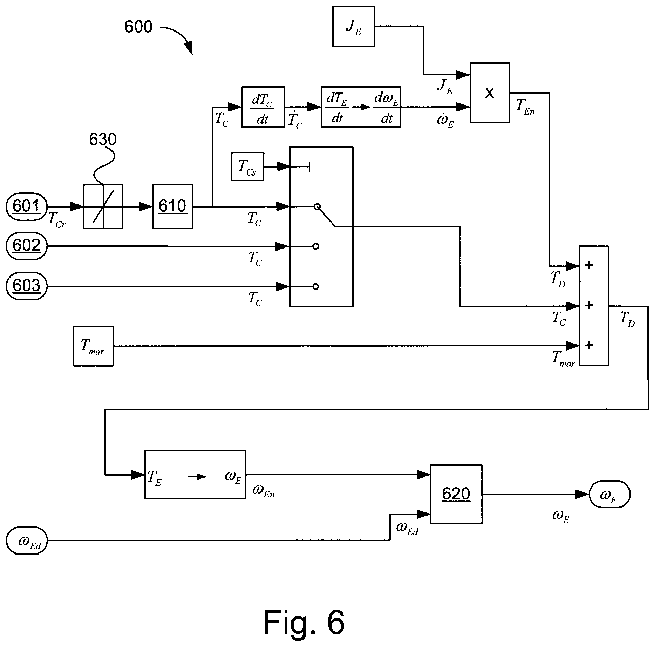

Fig. 6 depicts an algorithm according to an embodiment of the present invention. The algorithm shows how the method according to the invention is executed.

Clutch torque $T_{Cr}$ is requested, e.g. by pressing the vehicle's accelerator pedal. The current clutch torque $T_C$ is determined, which may be done in various ways 601, 602, 603. A first variant 601 for determination of clutch torque $T_C$ is by modelling by means of a clutch torque model 610, a second variant 602 by detection by sensor, and a third variant 603 by estimation from engine torque. These variants may be combined, being used as alternatives or together. These variants and combinations of them are described with reference to Fig. 3. Which one or more variants for determination of $T_C$ is to be used may, if there are several variants to choose from, be indicated by a signal from a clutch torque source $T_{Cs}$.

$$\frac{dT_C}{dt}$$

The clutch torque $T_C$ is derived to arrive at clutch torque derivative $\dot{T}_C$.

The clutch derivative $\dot{T}_C$ being the same as the engine torque derivative $\dot{T}_E$ makes it possible for the engine speed derivative $\dot{\omega}_E$ to be taken from the engine's torque/speed curve, e.g. according to Fig. 3, as described with reference to Fig. 5, method step S525.

The result arrived at by multiplying the engine's moment of inertia $J_E$ by the engine speed derivative $\dot{\omega}_E$ is the dynamic torque increase $T_D$ required for effecting the desired engine speed increase in order to provide the requested clutch torque increase.

The dynamic torque increase $T_D$, the current clutch torque $T_C$ and a torque error margin $T_{mar}$ which caters for erroneous reporting of the torque of the engine 230 are then added together to arrive at the necessary engine torque $T_{En}$, as described with reference to Fig. 5, method step S530.

The necessary engine speed $\omega_{En}$ is taken from the engine's torque/speed curve, e.g. according to Fig. 3, which shows the engine speed $\omega_E$ to which the necessary engine torque $T_{En}$ corresponds.

The necessary engine speed $\omega_{En}$ is then compared with a predetermined engine speed $\omega_{Ed}$ which according to this example is the idling speed.

If the necessary engine speed $\omega_{En}$ is greater than the predetermined engine speed $\omega_{Ed}$, the engine speed will be raised to the necessary engine speed $\omega_{En}$.

Fig. 7 depicts a computer according to an embodiment of the invention. More specifically, it depicts a diagram of a version of a device 700. The device 700 incorporates according to an embodiment the first control unit 201 illustrated in Fig. 2a. The device 700 incorporates according to an embodiment the second control unit 202 illustrated in Fig. 2a. The device 700 incorporates according to an embodiment the third control unit 203 illustrated in Fig. 2a. The device 700 incorporates according to an embodiment the control unit 200 illustrated in Fig. 2a. The device 700 incorporates according to an embodiment two or more of the control units 200, 201, 202, 203 illustrated in Fig. 2a. The device 700 incorporates according to an embodiment the external control unit 210 illustrated in Fig. 2a.

The device 700 comprises a non-volatile memory 720, a data processing unit 710 and a read/write memory 750. The non-volatile memory 720 has a first memory element 730 in which a computer programme, e.g. an operating system, is stored for controlling the function of the device 700. The device 700 further comprises a bus controller, a serial communication port, I/O means, an A/D converter, a time and date input and transfer unit, an event counter and an interruption controller (not depicted). The non-volatile memory 720 has also a second memory element 740.

A computer programme P is provided and comprises routines for control of engine speed for a motor vehicle with automatic transmission at the time of engaging the clutch when setting said vehicle in motion. The programme P may be stored in an executable form or a compressed form in a memory 760 and/or in a read/write memory 750.

The data processing unit 710 performing a certain function means the data processing unit 710 performing a certain part of the programme which is stored in the memory 760, or a certain part of the programme which is stored in the read/write memory 750.

The data processing unit 710 can communicate with a data port 799 via a data bus 715. The non-volatile memory 720 is intended for communication with the data processing unit 710 via a data bus 712. The separate memory 760 is intended to communicate with the data processing unit 710 via a data bus 711. The read/write memory 750 is intended to communicate with the data processing unit 710 via a data bus 714.

When data are received on the data port 799, they are stored temporarily in the second memory portion 740. When input data received have been temporarily stored, the data processing unit 710 is organised to perform code execution as described above. According to a version, information signals received on the data port 799 contain information generated by, for example, the operating means 250, the engine speed regulator 260, the clutch regulator 290. The information relates to a requested clutch torque $T_{Cr}$, current clutch torque, clutch torque increase (clutch closure rate), required dynamic torque increase, necessary engine torque, necessary engine speed. Information which is relevant for effecting calculations according to the innovative method for controlling the engine speed of a motor vehicle with automatic transmission at the time of engaging the clutch when setting said vehicle in motion may thus be supplied to the data port 799, be calculated internally in the device 700 and/or be stored in the memory 710. This information may thus be used by the device 700 for control of engine speed for a motor vehicle with automatic transmission at the time of engaging the clutch when setting said vehicle in motion. Parts of the methods herein described may be effected by the device 200 by means of the data processing unit 710 which runs the programme stored in the memory 760 or the read/write memory 750. When the device 200 runs the programme, methods herein described are executed.

## Claims

1. A method for speed control of an engine (230) of a motor vehicle (100) with automatic transmission at the time of engaging a clutch (235) of the vehicle when setting said vehicle in motion, **characterised by** the steps of:

   - requesting (S510) a desired clutch torque ($T_{Cr}$);
   - determining (S515) current clutch torque ($T_C$) of the clutch (235) and determining (S520) a closing rate for the clutch (235) at the time of engaging it;
   - determining (S525) the torque increase ($T_D$)

required for providing the engine speed increase required when engaging the clutch (235) at said closure rate;

- determining (S530), on the basis of parameters comprising said current clutch torque ($T_C$) and said torque increase ($T_D$), a necessary engine torque ($T_{En}$) for achieving said requested clutch torque ($T_{Cr}$);

- determining (S535) from said necessary engine torque ($T_{En}$) for the engine (230) a necessary engine speed ($\omega_{En}$) for achieving said requested clutch torque ($T_{Cr}$); and

- raising (S545) the engine speed ($\omega_E$) to the necessary engine speed ($\omega_{En}$) if the latter is greater than a predetermined engine speed ($\omega_{Ed}$).

2. A method according to claim 1, comprising the step of repeating (S550) said steps so long as the clutch is slipping.

3. A method according to claim 1 or 2, in which the parameters in the step of determining a necessary engine torque ($T_{En}$) further comprise a torque margin ($T_{mar}$) which is greater than potential error in determining the torque of the engine (230).

4. A method according to any one of claims 1-3, in which the clutch torque increase $(\dot{T}_C)$, i.e. the closure rate for the clutch (235), is so calibrated that there is a maximum rate at which the clutch (235) can be closed.

5. A method according to any one of claims 1-4, in which the step of determining (S325) a torque increase ($T_D$) comprises the steps of:

- determining the derivative of the engine torque $(\dot{T}_E)$ on the basis of the derivative of the clutch torque $(\dot{T}_C)$;.
- determining the derivative of the engine speed $(\dot{\omega}_E)$ from the derivative of the engine torque $(\dot{T}_E)$

said torque increase ($T_D$) being determined on the basis of the engine's moment of inertia ($J_M$) and said derivative of the engine speed $(\dot{\omega}_E)$.

6. A method according to any one of the foregoing claims, in which the step of determining (S535) a necessary engine speed ($\omega_{En}$) is effected by means of a torque/engine speed relationship predetermined for the engine (230).

7. A method according to claim 5 or 6, in which the step of determining the derivative of the engine speed $(\dot{\omega}_E)$ is effected by means of a torque/engine speed relationship predetermined for the engine (230).

8. A method according to any one of claims 1-7, in which the step of determining current clutch torque ($T_C$) comprises the step of:

- detecting said clutch torque ($T_C$) by means of at least one clutch torque sensor (280; 280a; 280b; 280c; 280d).

9. A method according to any one of claims 1-8, in which the step of determining current clutch torque ($T_C$) comprises the step of:

- modelling said clutch torque ($T_C$) by means of clutch input data.

10. A method according to any one of claims 1-9 in which the step of determining current clutch torque ($T_C$) comprises the step of:

- estimating said clutch torque ($T_C$) from the engine torque ($T_E$) and the engine's moment of inertia ($J_E$) and the engine's speed increase.

11. A device for speed control of an engine (230) of a motor vehicle (100) with automatic transmission at the time of engaging a clutch (235) of the vehicle when setting said vehicle in motion, **characterised by**:

- means (250, 201; 200) for requesting a desired clutch torque ($T_{Cr}$);
- means (200, 201, 202, 203) for determining current clutch torque ($T_C$) of the clutch (235) and means (200, 201, 202, 203, 290) for determining a closing rate for the clutch (235) at the time of engaging it;
- means (200, 201, 202, 203) for determining the torque increase ($T_D$) required for providing the engine speed increase required when engaging the clutch (235) at said closure rate;
- means (200, 201, 202, 203) for determining, on the basis of parameters comprising said current clutch torque ($T_C$) and said torque increase ($T_D$), a necessary engine torque ($T_{En}$) for achieving said requested clutch torque ($T_{Cr}$);
- means (200) for determining from said necessary engine torque ($T_{En}$) for the engine (230) a necessary engine speed ($\omega_{En}$) for achieving said requested clutch torque ($T_{Cr}$); and
- means (200) for raising the engine speed ($\omega_E$) to the necessary engine speed ($\omega_{En}$) if the latter is greater than a predetermined engine speed ($\omega_{Ed}$).

12. A device according to claim 11, in which the parameters for determining the necessary engine torque ($T_{En}$) further comprise a torque margin ($T_{mar}$) which is greater than potential error in determining the torque of the engine (230).

13. A device according to claim 11 or 12, comprising means (630) for so calibrating the clutch torque increase $(\dot{T}_C)$, i.e. the closure rate for the clutch (235), that there is a maximum rate at which the clutch (235) can be closed.

14. A device according to any one of claims 11-13, in which said means for determining the torque increase ($T_D$) comprises means (200, 201, 202, 203) for determining the derivative of the engine torque $(\dot{T}_E)$ on the basis of the derivative of the clutch torque $(\dot{T}_C)$; means (200, 201, 202, 203) for determining the derivative of the engine speed $(\dot{\omega}_E)$ from the derivative of the engine torque $(\dot{T}_E)$, said torque increase ($T_D$) being intended to be determined on the basis of the engine's moment of inertia ($J_M$) and said derivative of the engine speed $(\dot{\omega}_E)$.

15. A device according to any one of claims 11-14, comprising means (200, 201, 202, 203) for determining necessary engine speed ($\omega_{En}$) by means of a torque/speed relationship predetermined for the engine (230).

16. A device according to claim 14 or 15, comprising means (200, 201, 202, 203) for determining the derivative of the engine speed $(\dot{\omega}_E)$ by means of a torque/speed relationship predetermined for the engine (230).

17. A device according to any one of claims 11-16, in which said means (200, 201, 202, 203) for determining current clutch torque ($T_C$) comprises at least one clutch torque sensor (280; 280a; 280b; 280c; 280d) adapted to detecting said clutch torque ($T_C$).

18. A device according to any one of claims 11-16, in which said means (200, 201, 202, 203) for determining current clutch torque ($T_C$) comprises means (610) for modelling said clutch torque ($T_C$) by means of clutch input data.

19. A device according to any one of claims 11-16, in which said means (200, 201, 202, 203) for determining current clutch torque ($T_C$) comprises means (200, 201, 202, 203) for estimating said clutch torque ($T_C$) from the engine torque ($T_E$) and the engine's moment of inertia ($J_E$) and the engine's speed increase.

20. A motor vehicle comprising a device according to any one of claims 11-19.

21. A computer programme (P) for control of engine speed for a motor vehicle with automatic transmission at the time of engaging a clutch when setting said vehicle in motion, which computer programme comprises programme code stored on a computer-readable medium for performing the method steps according to claims 1-10 and is run on an electronic control unit (700; 201, 202, 203, 200) or another computer (700; 210) connected to the electronic control unit.

22. A computer programme product comprising a programme code stored on a computer-readable medium for performing the method steps according to claims 1-10, which computer programme is run on an electronic control unit (700; 201, 202, 203, 200) or another computer (700; 210) connected to the electronic control unit.

23. A computer programme product directly readable into an internal memory in an electronic control unit (700; 201, 202, 203, 200) or another computer (700; 210) connected to the electronic control unit, comprising a computer programme (P) for performing the method steps according to claims 1-10, which computer programme (P) is run on the computer (700; 201, 202, 203, 200; 700, 210).

**Patentansprüche**

1. Verfahren zur Drehzahlsteuerung eines Motors (230) eines Kraftfahrzeugs (100) mit einem Automatikgetriebe zu der Zeit eines Schließens einer Kupplung (235) des Fahrzeugs, wenn das Fahrzeug in Bewegung versetzt wird, **gekennzeichnet durch** die Schritte:

   - Anfordern (S510) eines gewünschten Kupplungsmoments ($T_{Cr}$);
   - Bestimmen (S515) eines aktuellen Kupplungsmoments ($T_D$) der Kupplung (235) und Bestimmen (S520) einer Schließrate für die Kupplung (235) zu der Zeit ihres Schließens;
   - Bestimmen (S525) einer Momenterhöhung ($T_D$), welche zu einem Bereitstellen der Motordrehzahlerhöhung benötigt wird, die erforderlich ist, wenn die Kupplung (235) mit der Schließrate geschlossen wird;
   - Bestimmen (S530) eines erforderlichen Motormoments ($T_{En}$) zum Erzielen des angeforderten Kupplungsmoments ($T_{Cr}$) auf der Grundlage von Parametern, die das aktuelle Kupplungsmoment ($T_C$) und die Momenterhöhung ($T_D$) umfassen;
   - Bestimmen (S535) einer erforderlichen Motordrehzahl ($\omega_{En}$) zum Erreichen des angeforderten Kupplungsmoments ($T_{Cr}$) aus dem erforderlichen Motormoment ($T_{En}$) des Motors (230); und
   - Erhöhen (S545) der Motordrehzahl ($\omega_E$) auf die erforderliche Motordrehzahl ($\omega_{En}$), falls letz-

tere größer ist als eine vorbestimmte Motordrehzahl ($\omega_{Ed}$).

2. Verfahren gemäß Anspruch 1, umfassend den Schritt: Wiederholen (S550) der genannten Schritte, solange die Kupplung schleift.

3. Verfahren gemäß Anspruch 1 oder 2, bei welchen die Parameter bei dem Schritt des Bestimmens eines erforderlichen Motormoments ($T_{En}$) ferner eine Momentspanne ($T_{mar}$) umfassen, die größer ist als ein potentieller Fehler beim Bestimmen des Moments des Motors (230).

4. Verfahren gemäß einem der Ansprüche 1 bis 3, bei welchem die Kupplungsmomenterhöhung (tc), d. h. die Schließrate für die Kupplung (235), derart kalibriert ist, dass eine maximale Rate existiert, bei welcher die Kupplung (235) geschlossen werden kann.

5. Verfahren gemäß einem der Ansprüche 1 bis 4, bei welchem der Schritt des Bestimmens (S325) einer Momenterhöhung ($T_D$) die Schritte umfasst:

   - Bestimmen der Ableitung des Motormoments ($\dot{T}_E$) auf der Grundlage der Ableitung des Kupplungsmoments ($\dot{T}_C$);
   - Bestimmen der Ableitung der Motordrehzahl ($\dot{\omega}_E$) aus der Ableitung des Motormoments ($\dot{T}_E$),

   wobei die Momenterhöhung ($T_D$) auf der Grundlage des Trägheitsmoments ($J_M$) des Motors und der Ableitung der Motordrehzahl ($\dot{\omega}_E$) bestimmt wird.

6. Verfahren gemäß einem der vorhergehenden Ansprüche, bei welchem der Schritt des Bestimmens (S535) einer erforderlichen Motordrehzahl ($\omega_{En}$) mittels einer Moment/Motordrehzahl-Beziehung durchgeführt wird, die für den Motor (230) vorbestimmt ist.

7. Verfahren gemäß Anspruch 5 oder 6, bei welchem der Schritt des Bestimmens der Ableitung der Motordrehzahl ($\dot{\omega}_E$) mittels einer Moment/Motordrehzahl-Beziehung durchgeführt wird, die für den Motor (230) vorbestimmt ist.

8. Verfahren gemäß einem der Ansprüche 1 bis 7, bei welchem der Schritt des Bestimmens des Kupplungsmoments ($T_C$) den Schritt umfasst:

   - Feststellen des Kupplungsmoments ($T_C$) mittels zumindest eines Kupplungsmomentsensors (280; 280a; 280b; 280c; 280d).

9. Verfahren gemäß einem der Ansprüche 1 bis 8, bei welchem der Schritt des Bestimmens des aktuellen Kupplungsmoments ($T_C$) den Schritt umfasst:

   - Modellieren des Kupplungsmoments ($T_C$) mittels Kupplungs-Eingabedaten.

10. Verfahren gemäß einem der Ansprüche 1 bis 9, bei welchem der Schritt des Bestimmens des aktuellen Kupplungsmoments ($T_C$) den Schritt umfasst:

    - Schätzen des Kupplungsmoments ($T_C$) aus dem Motormoment ($T_E$) und dem Trägheitsmoment ($J_E$) des Motors und der Drehzahlerhöhung des Motors.

11. Vorrichtung zur Drehzahlsteuerung eines Motors (230) eines Kraftfahrzeugs (100) mit einem Automatikgetriebe zu der Zeit eines Schließens einer Kupplung (235) des Fahrzeugs, wenn das Fahrzeug in Bewegung versetzt wird, **gekennzeichnet durch**:

    - Mittel (250, 201; 200) zum Anfordern eines gewünschten Kupplungsmoments ($T_{Cr}$);
    - Mittel (200, 201, 202, 203) zum Bestimmen eines aktuellen Kupplungsmoments ($T_D$) der Kupplung (235) und Mittel (200, 201, 202, 203, 209) zum Bestimmen (S520) einer Schließrate für die Kupplung (235) zu der Zeit ihres Schließens;
    - Mittel (200, 201, 202, 203) zum Bestimmen einer Momenterhöhung ($T_D$), welche zu einem Bereitstellen der Motordrehzahlerhöhung benötigt wird, die erforderlich ist, wenn die Kupplung (235) mit der Schließrate geschlossen wird;
    - Mittel (200, 201, 202, 203) zum Bestimmen eines erforderlichen Motormoments ($T_{En}$) zum Erzielen des angeforderten Kupplungsmoments ($T_{Cr}$) auf der Grundlage von Parametern, die das aktuelle Kupplungsmoment ($T_C$) und die Momenterhöhung ($T_D$) umfassen;
    - Mittel (200) zum Bestimmen einer erforderlichen Motordrehzahl ($\omega_{En}$) zum Erreichen des angeforderten Kupplungsmoments ($T_{Cr}$) aus dem erforderlichen Motormoment ($T_{En}$) des Motors (230); und
    - Mittel (200) zum Erhöhen der Motordrehzahl ($\omega_E$) auf die erforderliche Motordrehzahl ($\omega_{En}$), falls letztere größer ist als eine vorbestimmte Motordrehzahl ($\omega_{Ed}$).

12. Vorrichtung gemäß Anspruch 11, bei welcher die Parameter zum Bestimmen des erforderlichen Motormoments ($T_{En}$) ferner eine Momentspanne ($T_{mar}$) umfassen, die größer ist als ein potentieller Fehler beim Bestimmen des Moments des Motors (230).

13. Vorrichtung gemäß Anspruch 11 oder 12, umfassend Mittel (630) zum Kalibrieren der Kupplungsmomenterhöhung ($\dot{T}_C$), d. h. der Schließrate für die Kupplung (235), derart, dass eine maximale Rate existiert, bei welcher die Kupplung (235) geschlossen werden kann.

14. Vorrichtung gemäß einem der Ansprüche 11 bis 13, bei welcher das Mittel zum Bestimmen der Momenterhöhung ($T_D$) umfasst: Mittel (200, 201, 202, 203) zum Bestimmen der Ableitung des Motormoments ($\dot{T}_E$) auf der Grundlage der Ableitung des Kupplungsmoments ($\dot{T}_C$); Mittel zum Bestimmen der Ableitung der Motordrehzahl ($\dot{\omega}_E$) aus der Ableitung des Motormoments ($\dot{T}_E$), wobei die Momenterhöhung ($T_D$) auf der Grundlage des Trägheitsmoments ($J_M$) des Motors und der Ableitung der Motordrehzahl ($\dot{\omega}_E$) bestimmt wird.

15. Vorrichtung gemäß einem der Ansprüche 11 bis 14, umfassend Mittel (200, 201, 202, 203) zum Bestimmen einer erforderlichen Motordrehzahl ($\omega_{En}$) mittels einer Moment/Motordrehzahl-Beziehung, die für den Motor (230) vorbestimmt ist.

16. Vorrichtung gemäß einem der Ansprüche 14 oder 15, umfassend Mittel (200, 202, 202, 203) zum Bestimmen der Ableitung der Motordrehzahl ($\dot{\omega}_E$) mittels einer Moment/Motordrehzahl-Beziehung, die für den Motor (230) vorbestimmt ist.

17. Vorrichtung gemäß einem der Ansprüche 11 bis 16, bei welcher das Mittel (200, 201, 202, 203) zum Bestimmen des Kupplungsmoments ($T_C$) zumindest einen Kupplungsmomentsensor (280; 280a; 280b; 280c; 280d) umfasst, der zum Feststellen des Kupplungsmoments ($T_C$) angepasst ist.

18. Vorrichtung nach einem der Ansprüche 11 bis 16, bei welcher das Mittel (200, 201, 202, 203) zum Bestimmen des Kupplungsmoments ($T_C$) Mittel (200, 201, 202, 203) zum Modellieren des Kupplungsmoments ($T_C$) mittels Kupplungs-Eingabedaten umfasst.

19. Vorrichtung nach einem der Ansprüche 11 bis 16, bei welcher das Mittel (200, 201, 202, 203) zum Bestimmen des Kupplungsmoments ($T_C$) Mittel (200, 201, 202, 203) zum Schätzen des Kupplungsmoments ($T_C$) aus dem Motormoment ($T_E$) und dem Trägheitsmoment ($J_E$) des Motors und der Drehzahlerhöhung des Motors umfasst.

20. Kraftfahrzeug, umfassend eine Vorrichtung gemäß einem der Ansprüche 11 bis 19.

21. Computerprogramm (P) zur Drehzahlsteuerung für ein Kraftfahrzeug mit einem Automatikgetriebe zu der Zeit eines Schließens einer Kupplung des Fahrzeugs, wenn das Fahrzeug in Bewegung versetzt wird, wobei das Computerprogramm auf einem computerlesbaren Medium gespeicherten Programmcode zum Durchführen der Verfahrensschritte gemäß den Ansprüchen 1 bis 10 umfasst und auf einer elektronischen Steuereinheit (700; 201, 202, 203, 200) oder einem anderen mit der elektronischen Steuereinheit verbundenen Computer (700; 210) ausgeführt wird.

22. Computerprogrammprodukt, umfassend einen auf einem computerlesbaren Medium gespeicherten Programmcode zum Durchführen der Verfahrensschritte gemäß den Ansprüchen 1 bis 10, wobei das Computerprogramm auf einer elektronischen Steuereinheit (700; 201, 202, 203, 200) oder einem anderen mit der elektronischen Steuereinheit verbundenen Computer (700; 210) ausgeführt wird.

23. Computerprogrammprodukt, das direkt in einen internen Speicher einer elektronischen Steuereinheit (700; 201, 202, 203, 200) oder in einen anderen mit der elektronischen Steuereinheit verbundenen Computer (700; 210) hinein gelesen werden kann, umfassend ein Computerprogramm (P) zum Durchführen der Verfahrensschritte gemäß den Ansprüchen 1 bis 10, wobei das Computerprogramm (P) auf dem Computer (700; 201, 202, 203, 200; 700, 210) ausgeführt wird.

**Revendications**

1. Procédé pour la commande de la vitesse d'un moteur (230) d'un véhicule à moteur (100) avec une transmission automatique au moment d'engager un embrayage (235) du véhicule lors de la mise en mouvement dudit véhicule, **caractérisé par** les étapes consistant à :

   - demander (S510) un couple d'embrayage souhaité ($T_{Cr}$) ;
   - déterminer (S515) un couple d'embrayage effectif ($T_C$) de l'embrayage (235) et déterminer (S520) une cadence de fermeture pour l'embrayage (235) au moment de l'engager ;
   - déterminer (S525) l'augmentation de couple ($T_D$) requise en vue de fournir l'augmentation de la vitesse du moteur requise lors de l'engagement de l'embrayage (235) à ladite cadence de fermeture ;
   - déterminer (S530), sur la base des paramètres comprenant ledit couple d'embrayage effectif ($T_C$) et ladite augmentation de couple ($T_D$), un couple moteur nécessaire ($T_{En}$) en vue d'obtenir ledit couple d'embrayage demandé ($T_{Cr}$) ;
   - déterminer (S535) à partir dudit couple moteur nécessaire ($T_{En}$) pour le moteur (230) une vitesse de moteur nécessaire ($\omega_{En}$) en vue d'atteindre ledit couple d'embrayage demandé ($T_{Cr}$) ; et
   - relever (S545) la vitesse de moteur ($\omega_E$) à la vitesse de moteur nécessaire ($\omega_{En}$) si cette der-

nière est supérieure à une vitesse du moteur prédéterminée ($\omega_{Ed}$).

2. Procédé selon la revendication 1, comprenant l'étape consistant à répéter (S550) lesdites étapes tant que l'embrayage patine.

3. Procédé selon la revendication 1 ou 2, dans lequel les paramètres à l'étape consistant à déterminer un couple moteur nécessaire ($T_{En}$) comprennent en outre une marge de couple ($T_{mar}$) qui est supérieure à l'erreur potentielle lors de la détermination du couple du moteur (230).

4. Procédé selon l'une quelconque des revendications 1-3, dans lequel l'augmentation de couple d'embrayage ($\dot{T}_C$), c'est-à-dire la cadence de fermeture pour l'embrayage (235), est étalonnée de sorte qu'il y a une cadence maximale à laquelle l'embrayage (235) peut être fermé.

5. Procédé selon l'une quelconque des revendications 1-4, dans lequel l'étape consistant à déterminer (S325) une augmentation de couple ($T_D$) comprend les étapes consistant à :

   - déterminer la dérivée du couple moteur ($\dot{T}_E$) sur la base de la dérivée du couple d'embrayage ($\dot{T}_C$) ;
   - déterminer la dérivée de la vitesse de moteur ($\dot{\omega}_E$) à partir de la dérivée du couple moteur ($\dot{T}_E$) ;

   ladite augmentation de couple ($T_D$) étant déterminée sur la base du moment d'inertie ($J_M$) du moteur et de ladite dérivée de la vitesse de moteur ($\dot{\omega}_E$).

6. Procédé selon l'une quelconque des revendications précédentes, dans lequel l'étape consistant à déterminer (S535) une vitesse de moteur nécessaire ($\omega_{En}$) est effectuée au moyen d'une relation couple/vitesse du moteur prédéterminée pour le moteur (230).

7. Procédé selon la revendication 5 ou 6, dans lequel l'étape consistant à déterminer la dérivée de la vitesse de moteur ($\dot{\omega}_E$) est effectuée au moyen d'une relation couple/vitesse de moteur prédéterminée pour le moteur (230).

8. Procédé selon l'une quelconque des revendications 1-7, dans lequel l'étape consistant à déterminer le couple d'embrayage effectif ($T_C$) comprend les étapes consistant à :

   - détecter ledit couple d'embrayage ($T_C$) au moyen d'au moins un capteur de couple d'embrayage (280 ; 280a ; 280b ; 280c ; 280d).

9. Procédé selon l'une quelconque des revendications 1-8, dans lequel l'étape consistant à déterminer le couple d'embrayage effectif ($T_C$) comprend les étapes consistant à :

   - modéliser ledit couple d'embrayage ($T_C$) au moyen de données d'entrée d'embrayage.

10. Procédé selon l'une quelconque des revendications 1-9, dans lequel l'étape consistant à déterminer le couple d'embrayage effectif ($T_C$) comprend les étapes consistant à :

    - estimer ledit couple d'embrayage ($T_C$) à partir du couple moteur ($T_E$) et du moment d'inertie ($J_E$) du moteur et de l'augmentation de la vitesse du moteur.

11. Dispositif pour la commande de la vitesse d'un moteur (230) d'un véhicule à moteur (100) avec une transmission automatique au moment d'engager un embrayage (235) du véhicule lors de la mise en mouvement dudit véhicule, **caractérisé par** :

    - des moyens (250, 201 ; 200) en vue de demander un couple d'embrayage souhaité ($T_{Cr}$) ;
    - des moyens (200, 201, 202, 203) en vue de déterminer un couple d'embrayage effectif ($T_C$) de l'embrayage (235) et des moyens (200, 201, 202, 203, 290) en vue de déterminer une cadence de fermeture pour l'embrayage (235) au moment de l'engager ;
    - des moyens (200, 201, 202, 203) en vue de déterminer l'augmentation de couple ($T_D$) requise en vue de fournir l'augmentation de la vitesse du moteur requise lors de l'engagement de l'embrayage (235) à ladite cadence de fermeture ;
    - des moyens (200, 201, 202, 203) en vue de déterminer, sur la base de paramètres comprenant ledit couple d'embrayage effectif ($T_C$) et ladite augmentation de couple ($T_D$), un couple moteur nécessaire ($T_{En}$) en vue d'obtenir ledit couple d'embrayage demandé ($T_{Cr}$) ;
    - un moyen (200) en vue de déterminer à partir dudit couple moteur nécessaire ($T_{En}$) pour le moteur (230) une vitesse de moteur nécessaire ($\omega_{En}$) en vue d'obtenir ledit couple d'embrayage demandé ($T_{Cr}$) ; et
    - un moyen (200) en vue d'augmenter la vitesse de moteur ($\omega_E$) à la vitesse de moteur nécessaire ($\omega_{En}$) si cette dernière est supérieure à une vitesse de moteur prédéterminée ($\omega_{Ed}$).

12. Dispositif selon la revendication 11, dans lequel les paramètres en vue de déterminer le couple moteur nécessaire ($T_{En}$) comprennent en outre une marge de couple ($T_{mar}$) qui est supérieure à l'erreur potentielle lors de la détermination du couple du moteur (230).

**13.** Dispositif selon la revendication 11 ou 12, comprenant un moyen (630) en vue d'étalonner l'augmentation de couple d'embrayage ($\dot{T}_C$), c'est-à-dire la cadence de fermeture pour l'embrayage (235), de sorte qu'il y a une cadence maximale à laquelle l'embrayage (235) peut être fermé.

**14.** Dispositif selon l'une quelconque des revendications 11-13, dans lequel ledit moyen en vue de déterminer l'augmentation de couple ($T_D$) comprend des moyens (200, 201, 202, 203) en vue de déterminer la dérivée du couple moteur ($\dot{T}_E$) sur la base de la dérivée du couple d'embrayage ($\dot{T}_C$) ; des moyens (200, 201, 202, 203) en vue de déterminer la dérivée de la vitesse de moteur ($\omega_E$) à partir de la dérivée du couple moteur ($\dot{T}_E$), ladite augmentation de couple ($T_D$) étant destinée à être déterminée sur la base du moment d'inertie ($J_M$) du moteur et de ladite dérivée de la vitesse de moteur ($\omega_E$).

**15.** Dispositif selon l'une quelconque des revendications 11-14, comprenant des moyens (200, 201, 202, 203) en vue de déterminer la vitesse de moteur nécessaire ($\omega_{En}$) au moyen d'une relation couple/vitesse prédéterminée pour le moteur (230).

**16.** Dispositif selon la revendication 14 ou 15, comprenant des moyens (200, 201, 202, 203) en vue de déterminer la dérivée de la vitesse de moteur ($\omega_E$) au moyen d'une relation couple/vitesse prédéterminée pour le moteur (230).

**17.** Dispositif selon l'une quelconque des revendications 11-16, dans lequel lesdits moyens (200, 201, 202, 203) en vue de déterminer le couple d'embrayage effectif ($T_C$) comprennent au moins un capteur de couple d'embrayage (280 ; 280a ; 280b ; 280c ; 280d) adapté pour détecter ledit couple d'embrayage (Tc).

**18.** Dispositif selon l'une quelconque des revendications 11-16, dans lequel lesdits moyens (200, 201, 202, 203) en vue de déterminer le couple d'embrayage effectif ($T_C$) comprennent des moyens (610) en vue de modéliser ledit couple d'embrayage ($T_C$) au moyen de données d'entrée d'embrayage.

**19.** Dispositif selon l'une quelconque des revendications 11-16, dans lequel lesdits moyens (200, 201, 202, 203) en vue de déterminer le couple moteur effectif ($T_C$) comprennent des moyens (200, 201, 202, 203) en vue d'estimer ledit couple d'embrayage ($T_C$) à partir du couple moteur ($T_E$) et du moment d'inertie ($J_E$) du moteur et de l'augmentation de la vitesse du moteur.

**20.** Véhicule à moteur comprenant un dispositif selon l'une quelconque des revendications 11-19.

**21.** Programme informatique (P) pour la commande de la vitesse du moteur pour un véhicule à moteur avec une transmission automatique au moment d'engager un embrayage lors de la mise en mouvement dudit véhicule, lequel programme informatique comprend un code de programme mis en mémoire sur un support lisible par ordinateur en vue de mettre en oeuvre les étapes de procédé selon les revendications 1-10 et est exécuté sur une unité de commande électronique (700 ; 201, 202, 203, 200) ou un autre ordinateur (700 ; 210) connecté à l'unité de commande électronique.

**22.** Produit de programme informatique comprenant un code de programme mis en mémoire sur un support lisible par ordinateur en vue de mettre en oeuvre les étapes de procédé selon les revendications 1-10, lequel programme informatique est exécuté sur une unité de commande électronique (700 ; 201, 202, 203, 200) ou un autre ordinateur (700 ; 210) connecté à l'unité de commande électronique.

**23.** Produit de programme informatique lisible directement dans une mémoire interne dans une unité de commande électronique (700 ; 201, 202, 203, 200) ou un autre ordinateur (700 ; 210) connecté à l'unité de commande électronique, comprenant un programme informatique (P) en vue de mettre en oeuvre les étapes de procédé selon les revendications 1-10, lequel programme informatique (P) est exécuté sur l'ordinateur (700 ; 201, 202, 203, 200 ; 700, 210).

Fig. 1

Fig. 7

Fig. 2a

Fig. 2b

Fig. 3

Fig. 4a

Fig. 4b

```
                              ( Start )
                                  │
        S510  ⌇                   ▼
              ──────────►  ┌──────────────────────────┐
                           │ Request desired clutch torque │
                           └──────────────────────────┘
                                  │
        S515  ⌇                   ▼
                    ┌──────────────────────────────────┐
                    │   Determine current clutch torque   │
                    ├──────────────────────────────────┤
        S520  ⌇     │    Determine closing rate for clutch  │
                    └──────────────────────────────────┘
                                  │
        S525  ⌇                   ▼
                    ┌──────────────────────────────────┐
                    │ Determine dynamic torque increase required for │
                    │   providing desired engine speed increase      │
                    └──────────────────────────────────┘
                                  │
        S530  ⌇                   ▼
                    ┌──────────────────────────────────┐
                    │ Determine necessary engine torque based on │
                    │ current clutch torque, dynamic torque and assumed │
                    │          torque error margin                │
                    └──────────────────────────────────┘
                                  │
        S535  ⌇                   ▼
                    ┌──────────────────────────────────┐
                    │ From necessary engine torque, determine │
                    │ necessary engine speed from torque/speed curve │
                    │      pertaining to respective engine        │
                    └──────────────────────────────────┘
                                  │
                                  ▼
        S540  ⌇          ◇ Is necessary engine speed ◇   No
                         ◇ greater than predetermined ◇ ────┐
                         ◇       engine speed?         ◇      │
                                  │ Yes                       │
        S545  ⌇                   ▼                           │
                    ┌──────────────────────────────────┐      │
                    │     Raise engine speed to           │      │
                    │     necessary engine speed          │      │
                    └──────────────────────────────────┘      │
                                  │                           │
             No                   ▼                           │
        ◄───────────────── ◇ Is clutch ◇ ◄───────────────────┘
                           ◇ engaged?  ◇        S550
                                  │ Yes
                                  ▼
                              ( End )              Fig. 5
```

19

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9846909 A2